# EUROPÄISCHE PATENTSCHRIFT

(11) **EP 0 869 922 B1**
(45) Veröffentlichungstag und Bekanntmachung des Hinweises auf die Patenterteilung: **09.02.2000**
(21) Anmeldenummer: 96943872.0
(22) Anmeldetag: 09.10.1996
(51) Int. Cl.: C03B 37/08, C03B 5/04

(54) **VERFAHREN UND VORRICHTUNG ZUR HERSTELLUNG VON MINERALFASERN**
METHOD AND DEVICE FOR MANUFACTURING MINERAL FIBRES
PROCEDE ET DISPOSITIF DE FABRICATION DE FIBRES MINERALES

(30) Priorität: 09.10.1995 DE 19538599
(43) Veröffentlichungstag der Anmeldung: 14.10.1998
(73) Patentinhaber: Bürger, Gerhard, 31139 Hildesheim (DE); Gorobinskaya, Valentina, Kiew, 252124 (UA)
(72) Erfinder: GOROBINSKAYA, Valentina, Kiew, 252124 (UA); THAMM, Dirk, D-12621 Berlin (DE); KRAVTCHENKO, Irina, D-07747 Jena (DE); SOJREF, Dalik, D-10315 Berlin (DE); MEDWEDJEW, Alexander, Kiew, 252025 (UA)
(74) Vertreter: Walter, Wolf-Jürgen
(86) Internationale Anmeldenummer: DE9601974
(87) Internationale Veröffentlichungsnummer: WO9713729

(56) Entgegenhaltungen:
- WO-A-92/21628
- US-A- 3 985 530
- US-A- 4 675 039

## Beschreibung

Die Erfindung betrifft ein Verfahren zur Herstellung von Mineralfasern, insbesondere endlosen Mineralfasern, aus Gestein, glashaltigen Industrieabfällen und technischen Glasabfällen, sowie eine Vorrichtung zur Durchführung des Verfahrens. Auch betrifft die Erfindung die Verwendung der nach dem Verfahren gezogenen Endlosfasern.

Aus WO-A-92/21628 ist ein Verfahren zur Herstellung von Endlosmineralfasern bekannt, bei dem der Entnahmebereich der Schmelze in den Grenzen 0,8-0,2 der Schmelzhöhe gehalten wird.

Als Mineralfasern werden üblicherweise glasig erstarrte silikatische Fasern bezeichnet. Damit gehören Glasfasern und Fasern aus silikatischen Rohstoffen dazu. Man unterscheidet im weitesten Sinne Kurzfasern (Stapelfasern, diskrete Fasern, Steinwolle) und endlose Fasern.

Mineralfasern finden breite Anwendung in verschiedenen Gebieten der Technik und gegenwärtig werden immer neue Einsatzgebiete/Anwendungsfälle erschlossen. Die vielfältigen Möglichkeiten zur Herstellung von Mineralfasern mit optimalen Eigenschaften sind zweifellos noch nicht vollständig erschlossen. Ein Grund sind die vielfältigen Einsatzmöglichkeiten mit der entsprechenden Vielfalt der spezifischen Anforderungen an die Fasereigenschaften.

Die Produktion von Mineral/Glasfasern für die verschiedensten Anwendungen ist weit entwickelt. Dabei wird die Zusammensetzung der Gläser und die Parameter der Fasern dem jeweiligen Anwendungsfall angepaßt. Die Entwicklung neuer, industriell herstellbarer, vearbeitbarer /und bezahlbarer/ Mineralfasern ist ein äußerst vielparametriges Problem, bei dem eine Vielzahl von Optimierungsaufgaben zu lösen sind. Auszugsweise seien nur einige wichtige zu berücksichtigende Faktoren genannt, wie die Anzahl und Form der Ausgangskomponenten, Homogenität, Temperaturführung, Viskositäts-Temperatur-Abhängigkeit, Kristallisationsneigung, Verarbeitungsbereich, Oberflächenspannung, technologische Grenzen, Fasereigenschaften usw. Diese Aufgaben sind technologisch durchaus lösbar, erfordern aber oft einen wirtschaftlich nicht vertretbaren Aufwand.

Die am weitesten verbreiteten/verwendeten Mineralfasern sind ohne Zweifel Glasfasern. Das gilt ganz besonders für Endlosfasern. Bei der Herstellung der bekannten Glasfasern werden Rohstoffe verwendet die ökologisch bedenklich sind, bzw. deren Gewinnung/Produktion und deren Verwendung als Glasrohstoff zu Umweltbelastungen führt. Darüber hinaus ist die Verfügbarkeit bestimmter Glasrohstoffe begrenzt, und deren Preise wachsen ständig. Das Erschmelzen von Gläsern aus Rohstoffgemengen ist mit einem hohen Energieaufwand verbunden und erfordert umfangreiche Maßnahmen zur Reinigung der bei der Schmelze entstehenden Abgase.

Andererseits ist bekannt, daß einige z.T. weit verbereitete Gesteinsarten, Industrieabfälle wie Schlacken, Aschen und Stäube aufgrund ihrer chemischen Zusammensetzung für die Glasherstellung verwendet werden können.

Abfälle technischer Gläser, wie Fernsehbildröhren, Computer-Monitore, Luminiszenzlampen und andere in der Elektronik verwendete Gläser werden bisher meist als Sondermüll in Deponien gelagert, das betrifft in bestimmten Fällen sogar die bei der Produktion und Verarbeitung anfallenden Abfälle. Andererseits enthalten diese Gläser Komponenten die vorteilhaft auf die physikalisch-chemischen Eigenschaften von daraus hergestellten Glasfäden bzw. Glasfasern wirken.

Die Verwendung von Gesteinen für die Herstellung verschiedener Arten von Mineralwollen ist bekannt. Allerdings haben die entsprechenden Schmelzen eine hohe Kristallisationsneigung, eine Temperaturabhängikeit der Viskosität, die eine Formgebung (Faserbildung) nur in einem engen Temperaturintervall ermöglicht. Aufgrund der intensiven Färbung der Schmelze ist die Wärmeleitung innerhalb der der Schmelze gering und im Vergleich zu den bei der Glasfaserherstellung verwendetenen Schmelzen ergibt sich ein verändertes Wärmestrahlungsverhalten und daraus resultierend andere Verhältnisse der Wärme- und Masseströme innerhalb der Schmelze.

Gesteinsschmelzen unterscheiden sich auch hinsichtlich des Benetzungsverhaltens des Pt- und PtRh-Düsenmaterials von den Glasschmelzen. Um das Zulaufen des Düsenfeldes der Düseneinrichtung zu verhindern, muß mit höheren Viskositätswerten (d.h. niedrigeren Temperaturen) gearbeitet werden. Dabei erhöht sich das Risiko der Kristallisation der Schmelze, und die Produktivität sinkt.

Üblicherweise werden für die Herstellung endloser Fasern die Gesteinsrohstoffe unter Zugabe weiterer Komponenten geschmolzen um die Eigenschaften der Schmelze in gewünschter Weise zu verändern und an die jeweilige Verarbeitungs- und Formgebungstechnologie anzupassen.

Es ist ein Verfahren zur Herstellung endloser Mineralfasern aus Basaltgestein bekannt, bei dem bis 4 % TiO₂ als Zusatzstoff eingesetzt werden. Die Eigenschaften der Fasern und die erreichte Stabilität des Faserziehprozesses schränken die Verarbeitbarkeit und die Anwendungsmöglichkeiten ein (Tschechisches Patent 248881).

Des weiteren sind eine Reihe von von Verfahren zur Herstellung endloser Gesteinsfasern im Labormaßstab bekannt. Zum Beispiel beschreibt das Verfahren nach US PS 4.199.336 die Herstellung von Basaltkeramikfasern, bei dem aus überwiegend basalthaltigem Material geschmolzen wird, und über eine Düse aus der Schmelze eine monofile Faser gezogen wird. Diese Faser wird durch eine zusätzliche Wärmebehandlung kristallisiert.

Auch die Verwendung von Industrierückständen wie metallurgische Schlacken, Aschen, Stäube für die Herstellung von Mineralfasern ist bekannt. Dabei treten beim Schmelzen und Faserbildungsprozeß die oben schon für die Gesteine aufgeführten Probleme auf. Außerdem sind für diese Rohstoffe starke Schwankungen der chemischen Zusammensetzung, sowie innerhalb einer Charge als auch zwischen den Chargen charakteristisch. Dadurch wird die Bildung einer homogenen und für die Faserbildung geeigneten Schmelze zusätzlich erschwert. Überwiegend werden aus diesen Materialien Stapelfasern/ Mineralwollen hergestellt. Dabei werden diese Stoffe als eine Rohstoffkomponente eines Glasgemenges verwendet oder es werden verschiedene Zusatzstoffe beigesetzt.

Abfälle technischer Gläser, wie z.B. Bildröhren, Monitore, Leuchtstofflampen können nach Abtrennen der nicht glashaltigen und/oder in der Glasschmelze nicht löslichen Bestandteile ebenfalls für die Herstellung endloser Fasern oder von Stapelfasern verwendet werden. Allerdings ist die chemische Zusammensetzung solcher Abfälle nicht einheitlich und Schwankungen unterworfen. Diese Abfälle enthalten ökologisch bedenkliche chemische Elemente wie z.B. Pb, Sr, Ba u.a., weshalb sie als Sondermüll entsorgt werden. Durch aufwendige chemische und physikalische Verfahren können diese Schadstoffe in einen gefahrlosen oder gebundenen Zustand überführt werden. Die Reststoffe einer derartigen Verarbeitung sind aber wenig geeignet zu hochwertigen Produkten verarbeitet zu werden.

Demgegenüber liegt der Erfindung die Aufgabe zugrunde, ein Verfahren zu schaffen, das es ermöglicht, die oben genannten Gruppe von Ausgangsstoffen aus einer stabilen Schmelze zu Fasern, insbesondere zu endlosen Fasern zu verarbeiten und dabei die Qualität von Mineralfasern und deren textile Verarbeitbarkeit zu verbessern, sowie eine Vorrichtung zur Durchführung des Verfahrens bereitzustellen.

Erfindungsgemäß wird diese Aufgabe dadurch gelöst, daß nach der mechanischen Trennung von nicht glashaltigen und überwiegend glashaltigen Produkten
die überwiegend glashaltigen Produkte mit einer Teilchengröße von weniger als 80 mm in einer Schmelzwanne bei 1050-1480 °C aufgeschmolzen werden, wobei die Schmelzwanne mit einem Speiserkanal derart in Verbindung steht, daß zwischen Schmelzwanne und Speiserkanal im Oberflächenbereich der Schmelze ein Fließen der Schmelze von der Schmelzwanne in den Speiserkanal ermöglicht wird; und wobei
die Schmelze aus dem Speiserkanal einer Speisereinrichtung zugeführt wird; und
die Schmelze aus der Speisereinrichtung einer darunter angeordneten Düseneinrichtung zugeführt und von dort als Faden unter gleichzeitiger Erstarrung abgezogen wird; wobei erfindungsgemäß
die Zuführung der Schmelze zur Speisereinrichtung aus einem Entnahmebereich der Schmelze erfolgt, in der die Schmelze die folgenden Bedingungen erfüllt:
   a) der Verarbeitungsbereich in der Schmelze beträgt 40-100 K,
   b) die Viskosität der Schmelze bei 1450 °C beträgt 30 bis 160 dPa·s,
   c) die Viskosität der Schmelze bei 1300 °C beträgt 200 bis 1500 dPa·s,
   d) der Quotient aus der Viskosität (in Pa·s) und der Oberflächenspannung (in N/m) liegt zwischen 10 und 100,
   e) die Aktivierungsenergie des viskosen Fließens der Schmelze ist nicht größer als 290 kJ/Mol;
   f) das Verhältnis der Höhe (h_{S}) der Schmelze im Speiserkanal zur Höhe (h_{W}) der Schmelze in der Schmelzwanne (h_{S}):(h_{W}) beträgt (0,8 bis 1,1):(2 bis 6), und
   g) der Quotient aus der Fläche (F_{W}) des Schmelzspiegels in der Schmelzwanne und der Fläche (F_{S}) des Schmelzspiegels im Speiserkanal beträgt (F_{W}):(F_{S}) 0,5 bis 1,5.

Es ist vorteilhaft, wenn das Verhältnis der Breite (B_{S}) des Speiserkanals zur Breite (B_{W}) der Schmelzwanne (B_{S}):(B_{W})=(0,8 bis 1):(5 bis 12) beträgt.

Ein vorteilhafter Wert für das oben genannte Verhältnis (h_{S}):(h_{W}) beträgt (0,8 bis 1):(2,5 bis 5).

Ein vorteilhafter Wert für das oben genannte Verhältnis (F_{W}):(F_{S}) beträgt 0,6 bis 1,3.

Unter dem hier verwendeten Begriff "Gestein" werden basische und ultrabasische Gesteine wie Basalt, Diabas, Andesit, Amfibolit, Pyroxen, Porphyrit u.a. verstanden, die sich beim Erstarren und Kristallisation von Magma gebildet haben (Eruptiv- oder Ergußgesteine). Sie stellen ein kompliziertes Silikatsystem dar, das Alkali- und Erdalkalioxide enthält und durch einen hohen Gehalt an Eisenoxiden (bis 15 %) charakterisiert ist.

Als "glashaltige Industrieabfälle" werden feste Industrieabfälle bezeichnet, die hauptsächlich aus einer glasartigen Phase bestehen oder die eine glasartige Schmelze bilden oder die sich in einer Glasschmelze lösen. Dazu gehören Schlacken, Aschen und Stäube.

Technische Gläser werden in vielen Erzeugnissen der modernen Technik, z.B. in der Elektrotechnik, Elektronik und chemische Industrie verwendet. Die bei der Herstellung solcher Erzeugnisse und nach Ablauf der Lebensdauer dieser Erzeugnisse (Lampen, Röhren usw.) anfallenden Abfälle enthalten als wichtigen Bestandteil Glas (aber auch Metalle, Kunststoffe und andere Werkstoffe). Im Sinne der Erfindung werden derartige Abfälle als "technische Glasabfälle" bezeichnet. Außerdem gehören dazu die bei der Glasproduktion anfallenden Glasabfälle, die nicht immer direkt bei der Glasproduktion verwendet werden können.

Umfangreiche Untersuchungen haben gezeigt, daß es gelingt Schmelzen erfindungsgemäß zu Mineralfasern, insbesondere endlosen, zu verarbeiten, deren rheologisches Verhalten (z.B. Viskosität, Temperaturabhängigkeit der Viskosität, Aktivierungsenergie) und deren Komplex der physikalisch chemischen Eigenschaften (z.B. Oberflächenspannung, Benetzungsverhalten) durch die oben genannten Parameter charakterisiert werden. Besonders vorteilhaft liegen diese Parameter in folgenden Grenzen:
a) der Verarbeitungsbereich der Schmelze beträgt 60 bis 80 K
b) die Viskosität bei 1450°C beträgt 40 - 150 Pa s,
c) die Viskosität bei 1300°C beträgt 200 - 1000 Pa s
d) die Aktivierungsenergie des viskosen Fließens ist nicht größer als 270 kJ/mol,
wobei erfindungsgemäß der Quotient aus Viskosität und Oberflächenspannung 10 bis 100 (s/m) beträgt.

Dabei liegt die Temperatur der Schmelze im Bereich von 1050 bis 1480 °C, und die Differenz zwischen der unteren Verarbeitungstemperatur und der Liquidustemperatur der Schmelze ist nicht kleiner als 50 K.

Unter dem Verarbeitungsbereich wird das Temperaturintervall auf der Viskositäts-Temperatur-Abhängigkeit verstanden, in dem eine Zerfaserung der Schmelze möglich ist.

Bei Abweichung der Parameter der Schmelze von diesen Werten wird kein stabiler Faserbildungs- und -ziehprozeß erreicht.

Aufgrund der intensiven Färbung besonders der Schmelzen aus Gesteinen und Industrieabfällen u. a. durch den hohen Eisenoxidgehalt unterscheidet sich die Temperaturverteilung über die Höhe der Schmelze in der Schmelzwanne und im Speiser wesentlich von denen bei der Glasfaserherstellung bekannten. Die Abkühlgeschwindigkeit der Schmelzen in den oberen Schichten der Schmelze ist um ein vielfaches höher als bei den für die Faserherstellung verwendeten "durchsichtigen" Glasschmelzen. Die Masse- und Wärmeaustauschverhältnisse in den "schwarzen" Schmelzen (Schwärzungsgrad bis 0,9) unterscheidet sich wesentlich von den aus der Glasverarbeitung bekannten Verhältnissen. So kann sich aufgrund der starken Wärmeabstrahlung der Schmelze eine "Rinde" aus erstarrter Schmelze bilden, die den Wärmaustausch zwischen dem heißen Brennergasen und den tiefer gelegenen Schmelzschichten erschwert. Im Ergebnis ist für die oberflächennahe Zone ein hoher Temperaturgradient über die Höhe charakteristisch.

In abgeschwächter Form ergeben sich auch im Fall der Glasabfälle veränderte Verhältnisse bezüglich der Homogenität der Schmelze.

Überraschenderweise wurde festgestellt, daß bei der Entnahme der Schmelze für den Faserbildungsprozeß durch die Kombination eines definierten Entnahmebereiches, bestimmter Schmelzparameter und bestimmter konstruktiver Anordnungen ein stabiler Faserziehprozeß erreicht werden kann.

Der Entnahmebereich befindet sich innerhalb der im Speiserkanal befindlichen Schmelze. Dabei wird das rheologische Verhalten und der Komplex der physikalisch chemischen Eigenschaften der Schmelze innerhalb des Entnahmebereiches im wesentlichen durch die oben genannten Parameter der Schmelze beschrieben.

Erfindungsgemäß erfolgt die Entnahme der Schmelze für den Faserbildungsprozeß durch einen Fließspeiser. Dieser Fließspeiser besteht aus einem oder einer Gruppe von Röhrchen. Dabei wird das Röhrchen (werden die Röhrchen) durch den Boden des Speiserkanals hindurch so in der Schmelze positioniert, daß aus dem Entnahmebereich Schmelze in das/die Röhrchen eintritt. Vom oberen Teil des Röhrchen fließt die Schmelze im wesentlichen isothermisch zur Formgebung in ein Pt-Rh-Düsengefäß (das hier allgemein auch als Düseneinrichtung bezeichnet wird). In der Düseneinrichtung wird die Schmelze zu Fasern geformt und über eine Fadenabzugseinrichtung gezogen. Die Fasern haben üblicherweise einen Durchmesser zwischen 2 und 35 µm. Für die textile Verarbeitung sind Fasern mit Durchmessern von 5-25 µm besonders geeignet.

In Ausgestaltung des Verfahrens werden die Fasern mit einer Schlichte beschichtet. Dafür werden die Fasern über einen Schlichteauftrag geführt.

Eine Verringerung der Abrißrate und eine Verbesserung der Qualität der Mineralfasern und damit von deren textiler Verarbeitbarkeit erfolgt dadurch, daß in dem Verfahren zur Herstellung von Mineralfasern die Entnahme der Schmelze durch die Speisereinrichtung für die Formgebung derart erfolgt, daß die Eintauchtiefe der Speisereinrichtung gemessen vom Boden des Speiserkanals derart gewählt wird, daß der Quotient aus der Eintauchtiefe (h_{ET}) und der Höhe der Schmelze über der Oberkante der Speisereinrichtung (h_{O}) h_{ET}/h_{O} = 0,25 bis 4 beträgt.

Bei einer größeren Eintauchtiefe (Quotient > 4) tritt überhitzte Schmelze in das Röhrchen ein, deren Viskosität zu niedrig ist. Das führt zu Schwankungen der Faserdicke und im Ergebnis zum Ansteigen der Abrißrate. Schmelze, die bei zu geringer Eintauchtiefe entnommen wird, hat eine niedrige Temperatur und eine für die Faserbildung zu hohe Viskosität. Außerdem können in der Schmelze Kristalle wachsen, die zum Abbruch des Faserziehprozesses führen.

Durch die bevorzugte Gestaltung des Verfahrens dahingehend, daß zusätzlich Schmelze durch öffnungen in der Mantelfläche (des bzw. der Röhrchen) des Fließspeisers in das Innere der Röhrchen eintreten kann, wird die Zuführung einer noch homogeneren Schmelze in den Faserziehbereich erreicht, außerdem wird der Einfluß von Schwankungen der Temperatur und der Temperaturverteilung in der Schmelzwanne, die durch die Zugabe der Ausgangsmaterialien unausweichlich entstehen, reduziert und eine Kristallisation in der Düsenzwiebel praktisch vollständig ausgeschlossen. Dabei können endlose Fäden hoher Qualität hergestellt werden, und es werden Abrißraten von 0,9 Elementarfaserabrissen pro kg Fasern erreicht. Die Produktivität einer Formgebungseinheit beträgt 150 kg/Tag.

In vorteilhaften Weiterführung des Verfahrens können mehrere Fließspeiser verwendet werden, die einzeln oder als Gruppe beweglich sind und gemäß dem o.g. Quotienten arbeiten. Weiterhin kann die Schmelze in den Fließspeiser zusätzlich zu der oberen öffnung auch durch seitliche öffnungen in der Mantelfläche des Röhrchens (des Fleißspeisers) eintreten.

Ein Vorteil des Verfahrens besteht darin, daß in einem einstufigen Verfahren ohne Zugabe von Zusätzen Mineralfasern aus den Gesteinen (z.B. Basalt) hergestellt werden können. Da die eingesetzten Gesteine innerhalb einer Lagerstätte eine relativ konstante Zusammensetzung aufweisen, können sie direkt aufgeschmolzen werden. Dabei reduziert sich der Energieaufwand im Vergleich zum Erschmelzen eines Mehrkomponentengemenges beträchtlich, da es sich bei den Gesteinen um erstarrte Schmelzen handelt. Die Stadien der Silikatbildung, Homogenisierung und Läuterung der Schmelze, die bei der Erschmelzen einer Schmelze aus einem Gemenge erforderlich sind und einen hohen Energieaufwand erfordern, sind im Fall der erfindungsgemäß verwendeten Ausgangsmaterialien nicht oder nur geringerem Maße erheblich. Bei der Verwendung von Mehrkomponentengemengen für die Herstellung von Glasschmelzen ergeben sich Probleme hinsichtlich der homogenen Mischung der Komponenten und der Stabilität des Gemenges (Entmischung). Dieser Nachteil entfällt durch den Einsatz eines Einkomponenten-Gemenges.

Die Auswahl der verwendeten Teilchengröße der Ausgangsstoffe erfolgt ausgehend von der Möglichkeit einer gleichmäßigen Dosierung und Zuführung in die Schmelzwanne und der Begrenzung der durch die Zugabe der Schmelzrohstoffe bedingten Temperaturschwankungen in der Schmelzwanne.

Bei der Verwendung von zu feinkörnigem Material erhöht sich der Aufwand (Energie, Zeit) für das Entweichen der eingetragenen Luft und die Homogenisierung der Schmelze. Bevorzugt wird aus den zuvor genannten Ausgangsstoffen eine homogene Schmelze erzeugt und für die Formgebung/Faserbildung bereitgestellt, indem die geometrischen Abmessungen der Schmelzwanne und des Speiserkanals so gewählt und aufeinander abgestimmt werden, daß sich diese Schmelze bilden kann und insbesondere stabile Strömungsverhältnisse ohne Pulsationen und Schwankungen bestehen, wobei die Schmelze in dem oben beschriebenen Entnahmebereich entnommen wird und die Speisereinrichtung (Fließspeiser oder Speiserplatte) die Schmelze im wesentlichen isothermisch zur Düseneinrichtung (Düsengefäß oder Düsenplatte) transportiert werden. Dabei hat die Geometrie Einfluß darauf, daß der Zustand der Schmelze in gewünschter Weise den Ansprüchen die sich aus den komplexen Vorgängen des Ziehvorganges in der Düseneinrichtung ergeben, angleicht.

Im Zusammenhang mit den Besonderheiten der chemischen Zusammensetzung und den spezifischen Eigenschaften, insbesondere der geringen Wärmedurchlässigkeit der "schwarzen" Schmelzen sind die für die Herstellung von Glasfasern verwendeten Schmelzvorrichtungen, insbesondere bezüglich derer geometrische Abmessungen und Verhältnisse nicht geeignet.

Bei der Herstellung von Glasfasern werden ein- und zweistufige Verfahren unterschieden. Im einstufigen Verfahren werden die Schmelzen aus einem Mehrkomponenten-Gemenge erschmolzen und über eine Düseneinrichtung zu Fasern geformt. Die Schmelzwannen dieser Vorrichtungen unterteilen sich in eine Schmelz-, Läuter- und Abstehzone. Die Abstehzone kann auch in den Speiserkanal verlagert werden. Derartige Schmelzwannen sind für die erfindungsgemäßen Schmelzen überdimensioniert, da die Bedingungen für die Homogenisierung der Schmelze aus den verwendeten Ausgangstoffen im Vergleich zu den Mehrkomponenten-Gemengen günstiger sind. Die Stadien der Silikat- und Glasbildung und der Läuterung entfallen oder laufen schneller und bei geringerem Energieaufwand ab.

Bei den weiter verbreiteten, zweistufigen Verfahren wird in der ersten Stufe ein Glas erschmolzen, das zu Kugeln geformt wird. In der zweiten Stufe werden werden die Kugeln in einem Schmelzaggregat erschmolzen und über eine Düseneinrichtung Glasfasern gezogen. Diese Aggregate ist für das Erschmelzen der erfindungsgemäßen Ausgangsstoffe nicht geeignet, da keine ausreichende Homogenisierung der entsprechenden Schmelzen gewährleistet werden kann.

Um den Zutritt einer homogenen Schmelze in den Speiserkanal zu gewährleisten, soll das Verhältnis des Schmelzspiegels in der Schmelzwanne zur Fläche der Schmelzspiegels im Speiserkanal 0,5 - 1,5 betragen. Die Verwendung einer solchen Vorrichtung gewährleistet bei optimalem Brennstoffverbrauch und optimaler Temperaturverhältnissen in der Schmelze einen stabilen Transport der homogenen Schmelze zu dem Speiserkanal und zur Speisereinrichtung und folglich einen stabilen Faserbildungsprozeß mit einer verringerten Abrißrate.

Bei einem Verhältnis kleiner 0,5 können kristalline Einschlüsse aus der Schmelzwanne in den Speiserkanal gelangen und den Faserbildungsprozeß erheblich stören oder gar unterbrechen.

Eine Erhöhung des Verhältnisses über 1,5 erfordert einen höheren Brennstoffverbrauch, da dabei die Fläche des Schmelzspiegels in der Schmelzwanne im Vergleich zur Fläche im Speiserkanal stark ansteigt. Die Produktivität der Vorrichtung wird aber im wesentlich durch die Größe des Formgebungsbereiches bestimmt. Damit wird bei gleicher Produktivität der Schmelzwanne mehr Ausgangsmaterial zugeführt und der spezifische Energieverbrauch steigt.

Eine wichtige Rolle bei einer gleichmäßigen Zufuhr der Schmelze für die Formgebung spielt das Verhältnis der Breiten der Schmelzwanne und des Speiserkanals. Dabei wird unter der Breite das rechtwinklig zur Richtung des Hauptstroms der Schmelze in der aus Schmelzwanne und Speiserkanal bestehenden Schmelzvorrichtung liegende Maß der Schmelzwanne bzw. des Speiserkanals verstanden.

Bei einem Verhältnis der Breite (B_{S}) des Speiserkanals zur Breite der Schmelzwanne (B_{W}) von (0,8 bis 1) : (5 bis 12) wird eine gleichmäßige Zufuhr der Schmelze in den Speiserkanal gewährleistet und ein Pulsation der Schmelze verhindert. Damit wird die Entnahme der Schmelze durch die Speisereinrichtung stabilisiert.

Bei einer zu schmalen Schmelzwanne (B_{W} < 5) kann es zum pulsieren des Schmelzzuflusses in den Speiserkanal kommen, und die gleichmäßige Zufuhr aus dem Entnahmebereich der Schmelze wird nicht gewährleistet. Eine zu breite Schmelzwanne verringert die Strömungsgeschwindigkeit, und es können sich "tote zonen" bezüglich der Strömung ausbilden. Damit wächst das Risiko einer Kristallisation der Schmelze, und die Einhaltung des notwendigen Temperaturregimes erfordert einen höheren Energieverbrauch.

Für die Gestaltung/Ausbildung des Entnahmebereiches ist das Verhältnis der Höhe der Schmelze in Schmelzwanne und im Speiserkanal, besonders hinsichtlich der technischen Realisierbarkeit der Entnahme der Schmelze durch die Speisereinrichtung, von außerordentlicher Bedeutung. Als erfindungsgemäß anwendbar hat sich ein Verhältnis der Höhe (h_{S}) der Schmelze im Speiserkanal zur Höhe (h_{W}) der Schmelze in der Schmelzwanne entsprechend (h_{S}):(h_{W})=(0,8 bis 1,1):(2 bis 6), insbesondere (0,8 bis 1):(2,5 bis 5) erwiesen.

Die Höhe der Schmelze im Speiserkanal ist aufgrund der erwähnten Besonderheiten der Temperaturverteilung über die Höhe der Schmelze begrenzt. Für die Herstellung endloser Mineralfasern haben sich für die Gesteine Schmelzhöhen zwischen 40 und 80 mm bewährt. Für die glasartigen Abfälle können bei Schmelzhöhen zwischen 40 und 70 mm endlose Fasern gezogen werden. Bei technischen Glasabfällen wurde mit Schmelzhöhen von 60 - 100 mm für endlosen Fasern gearbeitet.

Eine Besonderheit der Herstellung von Fasern aus Gesteinen besteht in deren hohem Eisenoxidgehalt, dabei liegt das Verhältnis von Fe₂O₃ und FeO zum Beispiel im Bereich von (1,93-10,8) : (1,17 :11,8), wobei der Gehalt beider Komponenten bis zu 15 Gew-% betragen kann. Die beiden Eisenoxide wirken in komplizierter Weise auf den Zustand der Schmelze: Das Fe²⁺ und Fe³⁺ beeinflussen die Intensität der Verfärbung der Schmelze, deren Viskosität und Kristallisationsverhalten. Fe²⁺ färbt die Schmelze 15 mal intensiver als Fe³⁺, wobei Fe³⁺ z.B. die Viskosität der Schmelze verringert und Fe²⁺ die Schmelze viskoser macht. Gleichzeitig ist bekannt, daß Fe³⁺ die Kristallisationsvorgänge beeinflußt (Steigerung der Kristallkeimbildung und des Kristallisationswachstums).

Somit kann über durch Regulierung der Redoxbedingungen in der Schmelzwanne und bei der Verarbeitung das Verhältnis Fe²⁺/Fe³⁺derart eingestellt werden, daß durch die Überführung von Fe²⁺ in Fe³⁺ die Intensität der Färbung (Schwarzheit) der Schmelze verringert wird und damit der Wärmedurchgang zu den tieferen Schichten der Schmelze verbesserte werden. Zum anderen wird damit das Viskositätsverhalten der Schmelze im Speiserkanal beeinflußt.

Für die Stabilisierung der Temperaturregimes und Gewährleistung einer hohen Qualität der Fasern hat es sich als vorteilhaft erwiesen, die Schmelze unter oxidierenden Bedingungen durchzuführen. Sie kann aber auch unter neutralen oder reduzierenden Bedingungen durchgeführt werden.

Es ist bekannt, daß das Verhältnis Fe²⁺/Fe³⁺ Einfluß auf die Eigenschaften (z.B. Wärmebeständigkeit und dielektrische Eigenschaften) dieser Fasern hat. Somit ergibt sich über die Regulierung Redoxverhältnisse über das Verhältnis Brennstoff/Sauerstoff eine zusätzliche Möglichkeit zur Modifizierung der Fasereigenschaften.

Gegenstand der Erfindung ist auch eine Vorrichtung zur Durchführung des Verfahrens. Die Vorrichtung zur Herstellung von endlosen Mineralfasern aus Gestein, glasartigen Industrieabfällen oder technischen Glasabfällen, bestehend aus einer beheizbaren Schmelzwanne (1), einem mit der Schmelzwanne (1) in Verbindung stehenden Speiserkanal (2), der so angeordnet ist, daß der Schmelzspiegel (4) in der Schmelzwanne (1) im wesentlichen auf dem gleichen Niveau ist wie der Schmelzspiegel im Speiserkanal (2), einer im Speiserkanal in der Schmelze angeordneten Speisereinrichtung mit einem im wesentlichen senkrecht ausgerichteten Ablauf (9) durch den Boden (6) des Speiserkanals (2) und einer Düseneinrichtung am Ende des Ablaufs aus der Speisereinrichtung mit danach angeordneten Fadenabzugseinrichtungen (14), ist dadurch gekennzeichnet, daß die Schmelzwanne (1) in der Weise ausgestaltet ist, daß das Verhältnis der Höhe (h_{S}) der Schmelze im Speiserkanal (2) zur Höhe (h_{W}) der Schmelze in der Schmelzwanne (h_{S}):(h_{W})=(0,8 bis 1,1):(2 bis 6) einstellbar ist,
und daß das Verhältnis der Fläche (F_{W}) des Schmelzspiegels in der Schmelzwanne und der Fläche (F_{S}) des Schmelzspiegels im Speiserkanal (F_{W}):(F_{S}) = 0,5 bis 1,5 beträgt,
und der Fließspeiser (5), der entweder durch Röhrchen (7) oder eine oder mehrere Speiserplatten (17) gebildet wird, im Falle von Röhrchen (7) diese durch die Bodenöffnungen des Speiserkanals (2) hindurch wenigstens in dem Maße beweglich sind, daß der Quotient aus der Eintauchtiefe (h_{ET}) zur Höhe (h_{O}) der Schmelzschicht über der Oberkante des Röhrchens 0,25 bis 4 beträgt, wobei die Röhrchen des Fließspeisers unterhalb des Speiserkanals miteinander verbunden sind.

Bevorzugt ist die Schmelzwanne (1) mit einem in senkrechter Richtung veränderbaren Boden (3) ausgestaltet.

Vorzugsweise ist die Speiserplatte (17) eine im Boden des Speiserkanals (6) angeordnete Platte mit einer Durchflußöffnung (19) im ihrem zentralen Bereich, wobei die Durchflußöffnung von einer sie im wesentlichen vollständig umschließenden Fließschwelle (18) umgeben ist.

Weiterhin bevorzugt ist, daß das Verhältnis der Querschnittes (F_{Ö}) der Durchflußöffnung zur summaren Fläche (ΣF_{D}) der Düsenöffnungen/Querschnitt der Düsen in der Düsenplatte (F_{Ö}) : (ΣF_{D}) = 10 - 50 beträgt.

Ein weiteres bevorzugtes Merkmal der Vorrichtung besteht darin, daß im Bereich der Schmelze zwischen der Schmelzwanne (1) und dem Speiserkanal (2) eine vom Boden (6) des Speiserkanals ausgehende Schwelle (15) und ein vom Schmelzspiegel (4) ausgehender Abstreichblock (16) angeordnet ist.

Gegenstand der Erfindung ist auch die Verwendung einer nach dem erfindungsgemäßen Verfahren gezogenen Endlosfaser zur Herstellung von Geweben, nicht gewebten Artikeln (non woven) und Kompositen.

Eine weitere Ausführungsform besteht in der Verwendung zur Herstellung von Kurzfasern mit definierten geometrischen Abmessungen. Die Vorrichtung wird durch die Zeichnung näher erläutert. Dabei sind
Fig. 1 eine schematische Darstellung einer erfindungsgemäßen Vorrichtung
Fig. 2 eine schematische Darstellung des erfindungsgemäßen Fliespeisers und des Entnahmebereiches
Fig. 3 eine schematische Darstellung der erfindungsgemäßen Speiserplatte.

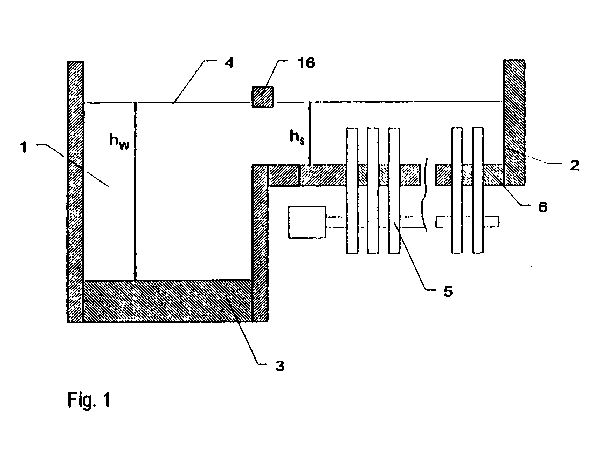

Gemäß Fig. 1 erfolgt das Aufschmelzen der Rohstoffe in einer Schmelzwanne 1, wobei die erhitzte Schmelze in ihrem Oberflächenbereich in einen Speiserkanal 2 gelangt. In dem Speiserkanal 2 erfolgt der Eintritt der Schmelze in eine Speisereinrichtung, die ein Fließspeiser 5 oder eine Speiserplatte 17 sein kann. Aus der Speisereinrichtung gelangt die Schmelze zu einer Düseneinrichtung mit anschließenden Fadenabzugseinrichtungen.

Die Höhe der Schmelze in der Schmelzwanne 1 wird entsprechend des angegebenen Verhältnisses gewählt. Die Umsetzung dieser Verfahrensanforderung gelingt durch eine Vorrichtung, bei der der Boden der Schmelzwanne in dem Maße beweglich/veränderbar ist, daß das Verhältnis der Höhe (h_{S}) der Schmelze im Speiserkanal zur Höhe (h_{O}) der Schmelze in der Schmelzwanne (h_{S}):(h_{W})=(0,8 bis 1,1):(2 bis 6) einstellbar ist.

Dabei kann der Schmelzwannenbodenboden 3 durch den zusätzlichen Einbau von Feuerfestmaterial während der regulären Wartungsarbeiten der Schmelzwanne angehoben werden. Der Boden 3 der Schmelzwanne kann auch mechanisch verschiebbar ausgeführt werden.

Eine andere Möglichkeit zur Veränderung des Verhältnisses der Schmelzhöhen besteht darin, durch eine Veränderung der Lage des Überganges von der fließfähigenen zur nichtfließfähigenen Schmelze (entspricht "toten Zone") in der Schmelzwanne 1 eine Verschiebung des Bodens 3 in vertikaler Richtung zu imitieren.

Bei einer größeren Höhe der Schmelze in der Schmelzwanne 1 vergrößert sich der spezifische Energieaufwand für das Erschmelzen einer homogenen Schmelze. Am Übergang der Schmelzwanne 1 zum Speiserkanal 2 können sich dabei sogenannte "tote zonen" mit sehr geringen Strömungsgeschwindigkeiten bilden. Bei zu flachen Schmelzwannen kann unzureichend homogenisierte Schmelze in den Speiserkanal eintreten. Im Ergebnis wird durch die Speisereinrichtung Schmelze entnommen, die nicht für die Faserbildung geeignet ist und der Faserziehprozeß bricht ab.

In vorteilhafter Ausführung der Vorrichtung werden am Übergang von der Schmelzwanne 1 zum Speiserkanal 2 ein vom Speiserkanalboden 6 ausgehende Schwelle 15 und/oder in Höhe des Schmelzspiegels 4 ein Abstreichblock 16 angeordnet.

Der Abstreichblock 16 verhindert dabei den Zutritt überhitzter und/oder inhomogener Schmelze aus der Schmelzwanne 1. Durch dies Trennung der oberflächennahen Schichten der Schmelze in der Schmelzwanne 1 und dem Speiserkanal 2 wird auch die Ausbildung einer den Wärmeaustausch zwischen dem Energieträger und der Schmelze erschwerenden "Rinde" (erstarrte Schmelze) behindert. Die Schwelle 15 behindert den zutritt hochviskoser (zu kalter) Schmelze in den Speiserkanal 2 und unterstützt die Bereitstellung einer homogenen Schmelze für die Entnahme aus dem Entnahmebereich 8.

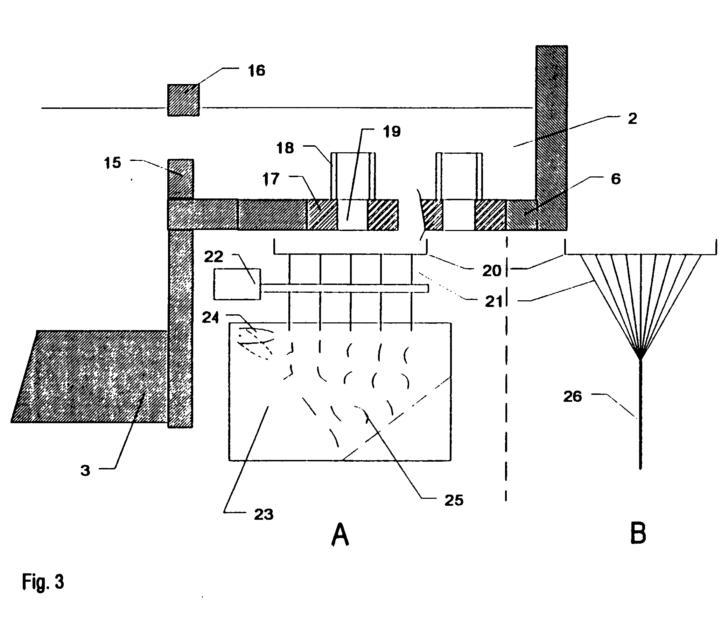

In einer weiteren Ausführung des Verfahrens gemäß Fig. 3 erfolgt die Entnahme der Schmelze aus dem Speiserkanal 2 durch eine Speiserplatte 17, wobei die Durchflußöffnung 19 von einer Fließschwelle 18 umgeben ist, die die Entnahme der Schmelze aus dem Entnahmebereich 8 der Schmelze gewährleistet.

Die Schmelze bedeckt den Boden des Speiserkanals 2 in dem sich die Speiserplatte 17 befindet. Unter der Speiserplatte 17 befindet sich eine elektrisch beheizte Düsenplatte 20, auf der die dosierte Schmelze verläuft. Bei einem Verhältnis der Fläche (F_{Ö}) des Querschnittes der Durchflußöffnung 19 zur Summe der Flächen (ΣF_{D}) der Düsenöffnungen in der Düsenplatte 20 im Bereich 10 - 50 werden optimale Bedingungen für die Faserbildung, d.h. für die Ausbildung einer stabilen Ziehzwiebel geschaffen. Durch ein konstantes gleichmäßig verteiltes Temperaturfeld in der Düseneinrichtung wird die Qualität der Fasern verbessert und die Abrißrate wesentlich herabgesetzt. Das Volumen der Zwiebel wird von folgenden technologischen Parametern beeinflußt: Durchmesser der Düse, Temperatur der Düsenplatte und Stauhöhe der Schmelze.

Wenn die Obergrenze überschritten wird, tritt eine Überschuß bezüglich der zugeführten Schmelze ein, die Stauhöhe steigt und die Ausbildung der Zwiebel wird behindert. Im Ergebnis wird die Stabilität des Faserbildungsprozesses gestört. Bei Unterschreitung der angegebenen Untergrenze des Verhältnisses der Querschnittsflächen kann die kontinuierliche Zufuhr der Schmelze zur Formgebung unterbrochen werden, was zu Schwankungen des Faserdurchmessers bis hin zum Abriß einzelner Fasern und zur Verringerung der Produktivität der Faserbildungseinheit führt. Die Düsen sollten ein Fläche von 1,0 bis 5,5 mm² haben. Bei einer kleineren Querschnittsfläche ist die Bildung der Zwiebel erschwert. Bei größeren Abmessungen geht die Zwiebel in einen Strahl über, der Durchmesser der Primärfasern wächst an, und die Abrißrate steigt. Die Schmelzzufuhr wird dabei üblicherweise so geregelt, daß der spezifische Verbrauch an einer einzelnen Düse 0,2 - 1 g/Minute beträgt. Die Fasern werden mit Hilfe einer Abzugseinrichtung 22 gezogen.

In einer vorteilhaften Ausführung gelangen die Primärfasern von der Abzugseinrichtung 22 in eine Blaskammer 23, wo sie nach den bekannten Blasverfahren durch einen heißen Gasstrom zu superfeinen Fasern 25 (Durchmesser kleiner als 7 µm) ausgezogen werden. Dadurch, daß bei dieser Vorgehensweise Primärfasern mit stabilen Parametern für die Stufe des Blasens bereitgestellt werden, lassen sich superfeine Fasern mit geringen Schwankungen der Fasereigenschaften und super- und ultradünne Fasern (z.B. mit Durchmessern von 0,5 - 2 µm) herstellen.

Für die Herstellung besonders dicker Fasern (bis 400 µm) werden die Elementarfasern nach der Abzugseinrichtung entnommen. Diese Fasern können zu Strängen vereint werden oder in verschiedenen Kompositwerkstoffen eingesetzt werden.

Beim Einsatz einer Speiserplatte 17 anstelle eines Fließspeisers 5 kann diese Speiserplatte auch wahlweise in einem Winkel bis zu 30 ° geneigt sein

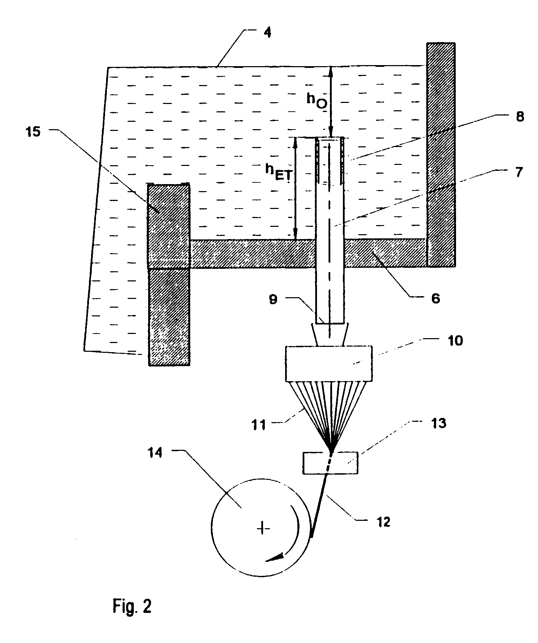

Der in Fig.2 dargestellte Fließspeiser 5 besteht aus einem Röhrchen 7, das durch Bodenöffnungen des Speiserkanals 2 hindurch in die Schmelze hineinragt. Der Fließspeiser kann auch, wie in Fig. 1 dargestellt, aus mehreren Röhrchen bestehen, wobei die Röhrchen gegebenenfalls unterhalb des speiserkanals 2 miteinander verbunden sind und die Röhrchen in senkrechter Richtung einzeln oder als Gruppe beweglich sind. Jedes einzelne Röhrchen kann als Fließspeiser bezeichnet werden, wie auch die Gruppe der Röhrchen. Bei einer Gruppe sind diese in dem Maße beweglich, daß der Quotient aus der Eintauchtiefe (h_{ET}) zur Höhe (H_{O}) der Schmelzschicht über der Oberkante des Röhrchens 0,25 bis 4 beträgt.

Wie bereits ausgeführt kann es vorteilhaft sein, daß im Bereich der Schmelze zwischen der Schmelzwanne 1 und dem Speiserkanal 2 eine vom Boden des Speiserkanals ausgehende Schwelle 15 und ein vom Schmelzspiegel 4 ausgehender Abstreichblock 16 angeordnet ist.

Bei der Verwendung der erfindungsgemäßen Gruppe von Rohstoffen für die Mineralfaserproduktion werden billige und ökologisch unbedenkliche Rohstoffe (Gestein) eingesetzt oder ökologisch belastende Stoffe in ein wirtschaftlich verwertbares Produkt umgewandelt. Da diese Rohstoffe im wesentlichen glashaltig sind, ergibt sich gleichzeitig eine Verringerung des Energieaufwandes für das Erschmelzen/ Aufschmelzen der Rohstoffe.

Gleichzeitig lassen sich die durch die chemische Zusammensetzung der erfindungsgemäßen Glasschmelzen bedingten guten physikalischen und oder chemischen Eigenschaften für neuartige Mineralfasern nutzen. Diese Fasern weisen im Vergleich zu den bekannten Glasfasern verbesserte physikalische und chemische Eigenschaften, z.B. dielektrische Eigenschaften, Wärmebeständigkeit, chemische Beständigkeit, mechanische Festigkeit. Außerdem verfügen diese Mineralfasern z.T. über einen vollkommen neuen Komplex von Eigenschaften (Kombination von Eigenschaften) die neue Anwendungsfälle für die Verwendung von Mineralfasern ermöglichen bzw. teure Spezial fasern ersetzen können, z.B. Armierung von Zement/ Beton, Strahlenschutz, Wärmeisolation im Temperaturbereich bis 900/1000°C, Katalysatorträger usw. Damit ergibt sich die Möglichkeit, die bei der Anpassung bekannter Glaszusammensetzungen an das spezifische Anforderungsprofil eines konkreten Einsatzfalles erforderlichen umfangreiche Entwicklungsarbeiten zu reduzieren und über die Auswahl geeigneter und wirtschaftlich interesssanter Ausgangstoffe Fasern mit den gewünschten Komplex von Eigenschaften kostengünstig zu entwicklen und herzustellen.

Nach der Erfindung lassen sich Mineralfasern herstellen, die für die Fertigung von Fäden, Rovings, Zwirnen, Schnüren und diskreten Fasern geeignet sind, die (wiederum) für die Herstellung von Geweben und Vliesstoffen und -materialien verschiedener Struktur oder auch in Kunststoffkompositen und Kompositen auf einem weitem Gebiet der Technik, wie Dämmung und Isolation, Elektrotechnik, Automobilbau, Bauwesen sowohl einzeln, als auch in Kombination untereinander und mit anderen Materialien (z.B. Metall, Papier, Glasfasern, Naturfasern) zum Einsatz kommen können.
Die Erfindung betrifft daher auch die Verwendung einer aus Gestein gezogenen Endlosfaser zur Herstellung von Geweben, nicht gewebten Artikeln (non woven) und Kompositen und insbesondere die Verwendung einer Gestein-Endlosfaser als geschnittene Stapelfaser gewünschter geometrischer Abmessungen.

Die Erfindung wird nachfolgend an Beispielen näher erläutert.

### Beispiel 1

Ein Andesit-Basalt mit folgender Zusammensetzung:
55,7 Gew.-% SiO₂, 19,5 Gew.-% Al₂O₃, 7,91 Gew.-% CaO 7,8 Gew.-% (Fe₂O₃+ FeO), 3,9 Gew.-% MgO, 1,9 Gew.-% Na₂O, 1,57 Gew.-% K₂O, 0,72 Gew.-% TiO₂ , 0,13 Gew.-% P₂O₅, 0,11 Gew.-% MnO wurde bis auf 40-60 mm mechanisch zerkleinert und der Schmelzwanne 1 eines direkt beheizten Ofens zugeführt. Der Basalt wurde bei einer Temperatur von 1165 - 1375 °C erschmolzen. Zur Verbesserung der Homogenität der Schmelze kann die Temperatur in der Schmelzwanne bis auf 1450°C erhöht werden. Die Schmelzwanne 1 war mit einem Speiserkanal 2 verbunden. Die Entnahme der Schmelze für die Faserbildung erfolgt durch den Fließspeiser 5. Das Verhältnis der Eintauchtiefe des Fließspeiserröhrchens zur Schmelzhöhe über dessen Oberkante im Speiserkanal betrug 1,4. Über das Röhrchen 7 des Fließspeisers 5 wurde die Schmelze dem Düsengefäß 10 mit 200 Düsen zuführt. Die Verarbeitung der Schmelze im Düsengefäß erfolgte im Temperaturbereich von 1390 - 1450 °C.

Die verarbeitete Basaltschmelze war durch folgende Parameter charakterisiert:
Breite des Verarbeitungsbereich der Schmelze 60 K;
Differenz zwischen Liquidustemperatur und unterer Verabeitungstemperaur: 160 K;
Viskosität bei 1300°C = 1000 d Pa s;
Viskosität bei 1450°C = 150 d Pa s;
Quotient η[Pa^{·}s]/ν [N/m] = 50;
Aktivierungsenergie des viskosen Fließens (E_{η}) = 240 KJ/mol.

Zum Ziehen der Endlosfasern 11 aus der in dem Pt-Rh-Düsengefäß 10 befindlichen Schmelze wurden die aus den Düsen austretenden Primärfasern auf eine Fadenabzugseinrichtung 14 gewickelt. Die gezogenen Basaltfasern hatten einen Durchmesser von 7-15 µm. Unter Produktionsbedingungen wurde eine Abrißrate von 0,8 Abrissen je kg Fasern erreicht, die eine textile Weiterverarbeitung ermöglicht. Die Fasern wurden zu einem Gewebe verarbeitet und zur Kunststoffverstärkung eingesetzt.

Die verwendete Vorrichtung war durch folgende Parameter charakterisiert:
Das Verhältnis der Schmelzflächen (F_{W}): (F_{S} = 0,64.
Die Breite des Speiserkanals verhielt sich zur Breite der Schmelzwanne (B_{S}) : (B_{W}) wie 1 : 5.
Die Höhe (h_{S}) der Schmelze im Speiserkanal verhielt sich zur Höhe (h_{W}) der Schmelze in der Schmelzwanne wie 1 : 4.

### Beispiel 2

Endlose Mineralfasern wurden aus Kraftwerkasche unter Zugabe von Kreide erfindungsgemäß hergestellt. Die Flugasche bestand aus etwa 43,6 Gew.-% SiO₂, 16,2 Gew.-% Al₂O₃, 1,6 Gew.-% Fe₂O₃, 5,25 Gew.-% FeO, 0,7 Gew.-% LiO₂, 26,7 Gew.-% CaO, 3,11 Gew.-% MgO, 0,67 Gew.-%K₂O und 2,17 Gew.-% sonstigen Bestandteilen.

In einer Pilotanlage wurden aus etwa 65 % Flugasche, entsprechend der aufgeführten Zusammensetzung unter Zusatz von Kreide endlose Fasern mit einem Durchmesser von 15 µm hergestellt.

### Beispiel 3

Im Labormaßstab wurden gemäß der Erfindung aus einem technischen Glasabfall (Leuchtstoffröhren) folgender Zusammensetzung: 72,0 Gew.-% SiO₂, 18,0 Gew.-% (Na₂O + K₂O), 8,0 Gew.-% (CaO + MgO + BaO), 2,0 Gew.-% Al₂O₃, < 0,01 Gew.-% FeO und Spuren an PbO, Sb₂O₃, As₂O₃, Cd, Tl und sonstige Bestandteile bei einer Verarbeitungstemperatur von 1100 - 1300°C endlose Fasern mit einem Durchmesser von 7 - 8 mm gezogen.

### Aufstellung der verwendeten Bezugszeichen und Begriffe

- 1: Schmelzwanne
- 2: Speiserkanal
- 3: Boden der Schmelzwanne
- 4: Schmelzspiegel
- 5: Fließspeiser
- 6: Boden des Speiserkanals
- 7: Röhrchen
- 8: Entnahmebereich
- 9: Ablauf
- 10: Düsengefäß
- 11: Faser (Elementarfaser)
- 12: Faden
- 13: Schlichteauftrag
- 14: Fadenabzugseinrichtung
- 15: Schwelle
- 16: Abstreichblock
- 17: Speiserplatte
- 18: Fließschwelle
- 19: Durchflußöffnung
- 20: Düsenplatte
- 21: Primärfasern
- 22: Abzugseinrichtung
- 23: Blaskammer
- 24: Blasdüse
- 25: superfeine Kurzfasern
- 26: Faserstrang

- h_{S} -: Höhe der Schmelze im Speiserkanal
- h_{W} -: Höhe der Schmelze in der Schmelzwanne
- h_{ET}-: Eintauchtiefe des Röhrchens
- h_{O} -: Höhe der Schmelzschicht über der Oberkante des Röhrchens im Speiserkanal

## Patentansprüche

1. Verfahren zur Herstellung von Mineralfasern aus Gestein, glasartigen Industrieabfällen oder technischen Glasabfällen, worin nach der mechanischen Trennung von nicht glashaltigen und überwiegend glashaltigen Produkten die überwiegend glashaltigen Produkte mit einer Teilchengröße von weniger als 80 mm in einer Schmelzwanne (1) bei 1050 bis 1480 °C aufgeschmolzen werden, wobei die Schmelzwanne (1) mit einem Speiserkanal (2) derart in Verbindung steht, daß zwischen Schmelzwanne (1) und Speiserkanal (2) im Oberflächenbereich der Schmelze ein Fließen der Schmelze von der Schmelzwanne (1) in den Speiserkanal (2) ermöglicht wird, und wobei die Schmelze aus dem Speiserkanal (2) einer Speisereinrichtung zugeführt wird, und wobei die Schmelze aus der Speisereinrichtung einer darunter angeordneten Düseneinrichtung zugeführt und von dort als Faden unter gleichzeitiger Erstarrung abgezogen wird, dadurch gekennzeichnet, daß
die Zuführung der Schmelze zur Speisereinrichtung aus einem Entnahmebereich (8) der Schmelze erfolgt, in der die Schmelze die folgenden Bedingungen erfüllt:
a) der Verarbeitungsbereich der Schmelze beträgt 40 bis 100 K,
b) die Viskosität der Schmelze bei 1450 °C beträgt 30 bis 160 dPa·s,
c) die Viskosität der Schmelze bei 1300 °C beträgt 200 bis 1500 dPa·s,
d) der Quotient aus der Viskosität (in Pa·s) und der Oberflächenspannung (in N/m) liegt zwischen 10 und 100,
e) die Aktivierungsenergie des viskosen Fließens der Schmelze ist nicht größer als 290 kJ/Mol; und
f) das Verhältnis der Höhe (h_{S}) der Schmelze im Speiserkanal zur Höhe (h_{W}) der Schmelze in der Schmelzwanne beträgt (h_{S}):(h_{W})=(0,8 bis 1,1):(2 bis 6); und
g) das Verhältnis der Fläche (F_{W}) des Schmelzspiegels (4) in der Schmelzwanne (1) zur Fläche (F_{S}) des Schmelzspiegels (4) im Speiserkanal (2) beträgt (F_{W}):(F_{S})=0,5 bis 1,5.

2. Verfahren nach Anspruch 1, dadurch gekennzeichnet, daß das Verhältnis der Breite (B_{S}) des Speiserkanals (2) zur Breite (B_{W}) der Schmelzwanne (B_{S}):(B_{W})=(0,8 bis 1):(5 bis 12) beträgt.

3. Verfahren nach Anspruch 1, dadurch gekennzeichnet, daß das Verhältnis (h_{S}):(h_{W})=(0,8 bis 1):(2,5 bis 5) beträgt.

4. Verfahren nach Anspruch 1, dadurch gekennzeichnet, daß das Verhältnis (F_{W}):(F_{S})= 0,6 bis 1,3 beträgt.

5. Verfahren nach Anspruch 1, dadurch gekennzeichnet, daß die Bedingungen im Entnahmebereich (8) der Schmelze wie folgt gehalten werden
- der Verarbeitungsbereich der Schmelze beträgt 60 bis 80 K,
- die Viskosität der Schmelze bei 1300 °C beträgt 200 bis 1000 dPa·s,
- die Viskosität der Schmelze bei 1450°C beträgt 40 bis 150 dPa·s
- die Aktivierungsenergie des viskosen Fließens der Schmelze ist nicht größer als 270 kJ/Mol.

6. Verfahren nach Anspruch 1, dadurch gekennzeichnet, daß die überwiegend glashaltigen Produkte aus Gestein ohne weitere Zuschlagstoffe eingesetzt werden.

7. Verfahren nach Anspruch 1, dadurch gekennzeichnet, daß die Überführung der Schmelze von der Schmelzwanne (1) in den Speiserkanal (2) über eine an Anfang des Speiserkanals (2) angeordnete Schwelle (15) erfolgt.

8. Verfahren nach Anspruch 1, dadurch gekennzeichnet, daß die Schmelze aus dem Speiserkanal (2) einem Fließspeiser (5) oder einer Speiserplatte (17) als Speisereinrichtung zugeführt wird.

9. Verfahren nach Anspruch 8, dadurch gekennzeichnet, daß die Schmelze einem Fließspeiser (5) zugeführt wird, der aus einem oder einer Gruppe von offenen Röhrchen (7) besteht, die im Boden des Speiserkanals (2) angeordnet sind, wobei das obere Ende jedes Röhrchens (7) offen ist und in die Schmelze des Speiserkanals (2) bis in den Entnahmebereich (8) hineinragt, und wobei das untere Ende jedes Röhrchens (7) offen ist, so daß wenigstens die oberhalb des Röhrchens (7) befindliche Schmelze in das Röhrchen (7) eintritt und zu der darunter angeordneten Düseneinrichtung läuft.

10. Verfahren nach Anspruch 9, dadurch gekennzeichnet, daß die Schmelze in ein oder mehrere Röhrchen (7) eines Fließspeisers (5) eingeführt wird, deren Oberkante im Entnahmebereich (8) der Schmelze liegt.

11. Verfahren nach Anspruch 9, dadurch gekennzeichnet, daß die Schmelze in die Röhrchen (7) des Fließspeisers (5) durch Öffnungen in der Mantelfläche der Röhrchen (7) und durch die oben offenen Enden der Röhrchen (7) eintritt, wobei alle Öffnungen im Entnahmebereich (8) der Schmelze liegen.

12. Verfahren nach Anspruch 1, dadurch gekennzeichnet, daß die Temperatur und/oder die Viskosität von Gesteinsschmelzen durch das Verhältnis von Fe²⁺ zu Fe³⁺ über die Regulierung der Redoxbedingungen im Schmelzaggregat beeinflußt wird.

13. Verfahren nach einem der Ansprüche 1 bis 12, dadurch gekennzeichnet, daß die Fasern zu einer Endlosfaser gezogen werden mit einem Fadendurchmesser im Bereich von 2 bis 400 µm, vorzugsweise 5 bis 150 µm, insbesondere 5 bis 25 µm.

14. Verfahren nach Anspruch 13, dadurch gekennzeichnet, daß die Endlosfaser eine Basaltfaser ist.

15. Verfahren nach Anspruch 1 bis 14, dadurch gekennzeichnet, daß die Differenz der unteren Verarbeitungstemperatur und der Liquidustemperatur der Schmelze nicht kleiner als 50 K ist; und worin die Elementarfasern unterhalb der Düseneinrichtung von einem waagerecht und/oder schräg zur Ziehrichtung geführten heißen Gasstrom zu Kurzfasern mit einem Durchmesser von 0,5 bis 7 µm gezogen werden.

16. Vorrichtung zur Herstellung von endlosen Mineralfasern aus Gestein, glasartigen Industrieabfällen oder technischen Glasabfällen, bestehend aus einer beheizbaren Schmelzwanne (1), einem mit der Schmelzwanne (1) in Verbindung stehenden Speiserkanal (2), der so angeordnet ist, daß der Schmelzspiegel (4) in der Schmelzwanne (1) im wesentlichen auf dem gleichen Niveau ist wie der Schmelzspiegel im Speiserkanal (2), einer im Speiserkanal in der Schmelze angeordneten Speisereinrichtung mit einem im wesentlichen senkrecht ausgerichteten Ablauf (9) durch den Boden (6) des Speiserkanals (2) und einer Düseneinrichtung am Ende des Ablaufs aus der Speisereinrichtung mit danach angeordneten Fadenabzugseinrichtungen (14), dadurch gekennzeichnet, daß die Schmelzwanne (1) in der Weise ausgestaltet ist, daß das Verhältnis der Höhe (h_{S}) der Schmelze im Speiserkanal (2) zur Höhe (h_{W}) der Schmelze in der Schmelzwanne (h_{S}):(h_{W})=(0,8 bis 1,1):(2 bis 6) einstellbar ist,
und daß das Verhältnis der Fläche (F_{W}) des Schmelzspiegels in der Schmelzwanne und der Fläche (F_{S}) des Schmelzspiegels im Speiserkanal (F_{W}):(F_{S}) = 0,5 bis 1,5 beträgt,
und der Fließspeiser (5), der entweder durch Röhrchen (7) oder eine oder mehrere Speiserplatten (17) gebildet wird, im Falle von Röhrchen (7) diese durch die Bodenöffnungen des Speiserkanals (2) hindurch wenigstens in dem Maße beweglich sind, daß der Quotient aus der Eintauchtiefe (h_{ET}) zur Höhe (h_{O}) der Schmelzschicht über der Oberkante des Röhrchens 0,25 bis 4 beträgt, wobei die Röhrchen des Fließspeisers unterhalb des Speiserkanals miteinander verbunden sind.

17. Vorrichtung nach Anspruch 16, dadurch gekennzeichnet, daß die Schmelzwanne (1) mit einem in senkrechter Richtung veränderbaren Boden (3) ausgestaltet ist.

18. Vorrichtung nach Anspruch 16, dadurch gekennzeichnet, daß die Speiserplatte (17) eine im Boden des Speiserkanals (6) angeordnete Platte ist mit einer Durchflußöffnung (19) im ihrem zentralen Bereich, wobei die Durchflußöffnung von einer sie im wesentlichen vollständig umschließenden Fließschwelle (18) umgeben ist.

19. Vorrichtung nach Anspruch 18, dadurch gekennzeichnet, daß das Verhältnis der Querschnittes (F_{Ö}) der Durchflußöffnung zur summaren Fläche (ΣF_{D}) der Düsenöffnungen/Querschnitt der Düsen in der Düsenplatte (F_{Ö}) : (ΣF_{D}) = 10 - 50 beträgt.

20. Vorrichtung nach Anspruch 16, dadurch gekennzeichnet, daß im Bereich der Schmelze zwischen der Schmelzwanne (1) und dem Speiserkanal (2) eine vom Boden (6) des Speiserkanals ausgehende Schwelle (15) und ein vom Schmelzspiegel (4) ausgehender Abstreichblock (16) angeordnet ist.

21. Verwendung einer nach einem der Ansprüche 1 bis 15 gezogenen Endlosfaser zur Herstellung von Geweben, nicht gewebten Artikeln (non woven) und Kompositen.

22. Verwendung nach Anspruch 21 zur Herstellung von Kurzfasern mit definierten geometrischen Abmessungen.

## Claims

1. Process for producing mineral fibres from rock, vitreous technical wastes or technical glass wastes, in which after the mechanical separation of non-glass-containing and predominantly glass-containing products the predominantly glass-containing products having a particle size of less than 80 mm are melted at 1050 to 1480°C in a melting bath (1), where the melting bath (1) is connected to a forehearth (2) in such a manner that flow of the melt from the melting bath (1) into the forehearth (2) is enabled between melting bath (1) and forehearth (2) in the surface area of the melt, and where the melt is fed from the forehearth (2) to a feeder device, and where the melt is fed from the feeder device to a bushing device arranged there below and is taken off from there as filament with simultaneous solidification, characterized in that
the melt is fed to the feeder device from a take-off area (8) of the melt in which the melt complies with the following conditions:
a) the processing range of the melt is 40 to 100 K,
b) the melt viscosity at 1450°C is 30 to 160 dPa·s,
c) the melt viscosity at 1300°C is 200 to 1500 dPa·s,
d) the quotient of the viscosity (in Pa·s) and the surface tension (in N/m) is between 10 and 100,
e) the energy of activation of the viscous flow of the melt is no greater than 290 kJ/mol; and
f) the ratio of the height (h_{S}) of the melt in the forehearth to the height (h_{W}) of the melt in the melting bath is (h_{S}):(h_{W}) = (0.8 to 1.1):(2 to 6); and
g) the ratio of the area (F_{W}) of the melt surface (4) in the melting bath (1) to the area (F_{S}) of the melt surface (4) in the forehearth (2) is (F_{W}):(F_{S}) 0.5 to 1.5.

2. Process according to Claim 1, characterized in that the ratio of the width (B_{S}) of the forehearth (2) to the width (B_{W}) of the melting bath (B_{S}): (B_{W}) = (0.8 to 1):(5 to 12).

3. Process according to Claim 1, characterized in that the ratio (h_{S}):(h_{W}) = (0.8 to 1):(2.5 to 5).

4. Process according to Claim 1, characterized in that the ratio (F_{W}):(F_{S}) = 0.6 to 1.3.

5. Process according to Claim 1, characterized in that the conditions in the take-off area (8) of the melt are maintained as follows
- the processing range of the melt is 60 to 80 K
- the melt viscosity at 1300°C is 200-1000 dPa·s
- the melt viscosity at 1450°C is 40-150 dPa·s,
- the energy of activation of viscous flow of the melt is no greater than 270 kJ/mol.

6. Process according to Claim 1, characterized in that the predominantly glass-containing products of rock are used without further additives.

7. Process according to Claim 1, characterized in that the melt is transferred from the melting bath (1) into the forehearth (2) via a baffle (15) arranged at the start of the forehearth (2).

8. Process according to Claim 1, characterized in that the melt is fed from the forehearth (2) to a flow feeder (5) or a flow block (17) as feeder device.

9. Process according to Claim 8, characterized in that the melt is fed to a flow feeder (5) which comprises an open tube (7) or a group of open tubes (7) which are arranged in the bottom of the forehearth (2), where the upper end of each tube (7) is open and inserts into the melt of the forehearth (2) up to the take-off area (8), and where the lower end of each tube (7) is open so that at least the melt situated above the tube (7) enters into the tube (7) and runs to the bushing device arranged beneath it.

10. Process according to Claim 9, characterized in that the melt is introduced into one or more tubes (7) of a flow feeder (5), the top edge of which is in the take-off area (8) of the melt.

11. Process according to Claim 9, characterized in that the melt enters into the tubes (7) of the flow feeder (5) through orifices in the curved surface of the tubes (7) and through the ends of the tubes (7) which are open at the top, all orifices lying in the take-off area (8) of the melt.

12. Process according to Claim 1, characterized in that the temperature and/or the viscosity of rock melts is dependent by the ratio Fe²⁺ to Fe³⁺ by controlling the redox conditions in the melting unit.

13. Process according to one of Claims 1 to 12, characterized in that the fibres are drawn to form a continuous fibre having a filament diameter in the range of 2 to 400 µm, preferably 5 to 150 µm, in particular 5 to 25 µm.

14. Process according to Claim 13, characterized in that the continuous fibre is a basalt fibre.

15. Process according to 1 to 14, characterized that te difference between the lower processing temperature and the liquidus temperature of the melt is not less than 50 K; and in which the filaments are drawn beneath the bushing device by a hot gas stream conducted horizontally and/or at an incline to the drawing direction to form short fibres having a diameter of 0.5 to 7µm.

16. Apparatus for the manufacture of continuous mineral fibres from rock, vitreous technical wastes or technical glass wastes, comprising a heatable melting bath (1), a forehearth (2) connected to the melting bath (1), which forehearth is arranged in such a manner that the melt surface (4) in the melting bath (1) is essentially at the same level as the melt surface in the forehearth (2), a feeder device which is arranged in the melt in the forehearth and has an essentially vertically orientated outlet (9) through the bottom (6) of the forehearth (2) and a bushing device at the end of the outlet out of the feeder device having thread winder devices (14) arranged downstream therefrom, characterized in that the melting bath (1) is designed in such a manner that the ratio of height (h_{S}) of the melt in the forehearth (2) to the height (h_{W}) of the melt in the melting bath (h_{S}):(h_{W}) is adjustable = (0.8 to 1.1):(2 to 6) and the flow feeder (5), which is formed either by tubes (7) or one or more flow blocks (17), in the case of tubes (7) [lacuna], these are movable through the bottom orifices of the forehearth (2) at least to the extent that the quotient of the depth of submergence (h_{ET}) to the height (h_{O}) of the melt layer above the upper edge of the tube is 0.25 to 4, wherein the tubes of the flow feeder below the forehearth are connected to one another.

17. Apparatus according to Claim 16, characterized in that the melting bath (1) is designed having a bottom (3) which can be changed in a vertical direction.

18. Apparatus according to Claim 16, characterized in that the flow block (17) is a plate arranged in the bottom of the forehearth (6) having a flow-through orifice (19) in its central region, the flow-through orifice being enclosed by a flow ring (18) essentially completely surrounding it.

19. Apparatus according to Claim 18, characterized in that the ratio of the cross-section (F_{Ö}) of the flow-through orifice to the total area (ΣF_{D}) of the nozzle orifices/cross-section of the nozzles in the nozzle plate is (F_{Ö}): (ΣF_{D}) = 10-50.

20. Apparatus according to Claim 16, characterized in that, in the region of the melt between the melting bath (1) and the forehearth (2), a baffle (15) starting from the bottom (6) of the forehearth and a skimmer block (16) starting from the melt surface (4) are arranged.

21. Use of a continuous fibre drawn according to one of Claims 1 to 15 for the manufacture of woven fabrics, nonwoven articles and composites.

22. Use according to Claim 21 for the manufacture of short fibres having defined geometric dimensions.

## Revendications

1. Procédé de fabrication de fibres minérales à partir de roches, de déchets industriels du type verre ou de déchets de verre techniques, dans lequel après la séparation mécanique de produits ne contenant pas de verre et de produits contenant principalement du verre, les produits contenant principalement du verre d'une granulométrie inférieure à 80 mm sont fondus dans une cuve de fusion (1) à 1050-1480 °C, la cuve de fusion (1) étant en communication avec un canal d'alimentation (2) de telle façon qu'un écoulement des matières fondues, de la cuve de fusion (1) dans le canal d'alimentation (2), soit permis entre la cuve de fusion (1) et le canal d'alimentation (2), dans la région de la surface du bain de fusion, les matières fondues sortant du canal d'alimentation (2) étant acheminées à un dispositif d'alimentation, et les matières fondues issues du dispositif d'alimentation étant dirigées sur un dispositif de filières situé en dessous de ce dernier, d'où elles sont extraites sous forme de fil, en se solidifiant, caractérisé en ce que:
l'amenée des matières fondues au dispositif d'alimentation se fait à partir d'une zone de prélèvement (8) du bain de fusion, dans laquelle les matières fondues réunissent les conditions suivantes:
a) l'intervalle de transformation des matières fondues est de 40-100 K,
b) la viscosité des matières fondues à 1450 °C est de 30 à 160 dPa.s,
c) la viscosité des matières fondues à 1300 °C est de 200 à 1500 dPa.s,
d) le quotient de la viscosité (en Pa.s) par la tension superficielle (en N/m) est compris entre 10 et 100,
e) l'énergie d'activation de l'écoulement visqueux des matières fondues n'est pas supérieure à 290 kJ/mol;
f) le rapport de la hauteur (hₛ) des matières fondues dans le canal d'alimentation à la hauteur (h_{w}) des matières fondues dans la cuve de fusion (hₛ):(h_{w}) est de (0,8 à 1,1):(2 à 6), et
g) le rapport de l'étendue (F_{w}) de la surface (4) du bain de fusion dans la cuve de fusion (1) à l'étendue (Fₛ) de la surface (4) de la matière en fusion présente dans le canal d'alimentation (2) est de (F_{w}):(Fₛ) 0,5 à 1,5.

2. Procédé selon la revendication 1, caractérisé en ce que le rapport de la largeur (B_{S}) du canal d'alimentation (2) à la largeur (B_{W}) de la cuve de fusion est de (B_{S}):(B_{W})=(0,8 à 1):(5 à 12).

3. Procédé selon la revendication 1, caractérisé en ce que le rapport est de (h_{S}) : (h_{W}) = (0,8 à 1):(2,5 à 5).

4. Procédé selon la revendication 1, caractérisé en ce que le rapport (F_{W}):(F_{S}) = 0,6 à 1,3.

5. Procédé selon la revendication 1, caractérisé en ce que les conditions régnant dans la zone de prélèvement (8) du bain de fusion sont maintenues de la manière suivante:
- l'intervalle de transformation de la matière en fusion est de 60 à 80 K,
- la viscosité de la matière en fusion à 1300 °C est de 200 à 1000 dPa.s,
- la viscosité de la matière en fusion à 1450 °C est de 40 à 150 dPa.s,
- l'énergie d'activation de l'écoulement visqueux de la matière en fusion n'est pas supérieure à 270 kJ/mol.

6. Procédé selon la revendication 1, caractérisé en ce que les produits à base de roches contenant essentiellement du verre sont utilisés sans autres additifs.

7. Procédé selon la revendication 1, caractérisé en ce que le transfert de la matière en fusion de la cuve de fusion (1) au canal d'alimentation (2) se fait par franchissement d'un seuil (15) prévu au commencement du canal d'alimentation (2).

8. Procédé selon la revendication 1, caractérisé en ce que la matière en fusion est acheminée du canal d'alimentation (2) à un distributeur de coulée (5) ou à une plaque distributrice (17) servant de dispositif d'alimentation.

9. Procédé selon la revendication 8, caractérisé en ce que la matière en fusion est acheminée à un distributeur de coulée (5) qui se compose d'un petit tube (7) ou groupe de petits tubes disposés au fond du canal d'alimentation (2), l'extrémité supérieure de chaque petit tube (7) étant ouverte et s'avançant dans la matière en fusion présente dans le canal d'alimentation (2), jusque dans la zone de prélèvement (8), et l'extrémité inférieure de chaque petit tube (7) étant ouverte, de sorte que la matière en fusion se trouvant au dessus du petit tube (7), au moins, pénètre dans le petit tube (7) et s'écoule vers le dispositif à filières situé sous ce dernier.

10. Procédé selon la revendication 9, caractérisé en ce que la matière en fusion est introduite dans un ou plusieurs petits tubes (7) d'un distributeur de coulée (5), tubes dont le bord supérieur se trouve dans la zone de prélèvement (8) de la matière en fusion.

11. Procédé selon la revendication 9, caractérisé en ce que la matière en fusion pénètre dans les petits tubes (7) du distributeur de coulée (5) par des orifices ménagés dans la face périphérique des petits tubes (7) et par les extrémités des petits tubes (7) ouvertes en partie haute, tous les orifices se situant dans la zone de prélèvement de la matière en fusion.

12. Procédé selon la revendication 1, caractérisé en ce que la température et/ou la viscosité de bains de fusion de roches est influencée par le rapport de Fe²⁺ à Fe³⁺ via la régulation des conditions redox dans le dispositif de fusion.

13. Procédé selon l'une des revendications 1 à 12, caractérisé en ce que les fibres sont étirées pour former une fibre continue d'un diamètre de fil de l'ordre de 2 à 400 µm, de préférence de 5 à 150 µm, en particulier de 5 à 25 µm.

14. Procédé selon la revendication 13, caractérisé en ce que la fibre continue est une fibre de basalte.

15. Procédé selon les revendications 1 à 14, caractérisé en ce que la différence entre la température de transformation inférieure et la température de liquidus du bain de fusion n'est pas inférieure à 50 K, et dans lequel les fibres élémentaires se trouvant en dessous du dispositif de filières sont étirées en fibres courtes d'un diamètre de 0,5 à 7 µm par un courant de gaz chaud canalisé horizontalement et/ou en oblique par rapport au sens d'étirage.

16. Dispositif pour la fabrication de fibres minérales continues à partir de roches, de déchets industriels du type verre ou de déchets de verre techniques, comprenant une cuve de fusion (1) pouvant être chauffée, un canal d'alimentation (2) en communication avec la cuve de fusion (1) qui est agencé de telle sorte que la surface (4) du bain de fusion présent dans la cuve de fusion se situe quasiment au même niveau que la surface de la matière en fusion se trouvant dans le canal d'alimentation (2), un dispositif d'alimentation disposé dans le canal d'alimentation, dans la matière en fusion, avec un orifice d'écoulement (9) orienté quasiment à la verticale au travers du fond (6) du canal d'alimentation (2), et un dispositif à filières à l'extrémité de l'orifice d'écoulement en sortie du dispositif d'alimentation, avec des dispositifs d'extraction de fil (14) prévus à la suite, caractérisé en ce que la forme donnée à la cuve de fusion (1) est telle que le rapport de la hauteur (hs) de la matière en fusion se trouvant dans le canal d'alimentation (2) à la hauteur (h_{w}) du bain de fusion dans la cuve de fusion (h_{S}):(h_{W}) = (0,8 à 1,1) : (2 à 6) est ajustable, et que le rapport de l'étendue (F_{W}) de la surface du bain de fusion se trouvant dans la cuve de fusion à l'étendue (F_{S}) de la surface de la matière en fusion dans le canal d'alimentation (F_{W}):(F_{S}) est = 0,5 à 1,5, et que le distributeur de coulée (5) est formé soit de petits tubes (1), soit d'une ou de plusieurs plaques distributrices (17), et que dans le cas de petits tubes (7), ceux-ci sont mobiles au travers des ouvertures du fond du canal d'alimentation (2), au moins de façon à ce que le quotient de la profondeur de plongée (h_{ET}) par la hauteur (h_{O}) de la couche en fusion au-dessus du bord supérieur du petit tube soit de 0,25 à 4, les petits tubes du distributeur de coulée étant en relation les uns avec les autres en dessous du canal d'alimentation.

17. Dispositif selon la revendication 16, caractérisé en ce que la cuve de fusion (1) est équipée d'un fond (3) modifiable dans le sens vertical.

18. Dispositif selon la revendication 16, caractérisé en ce que la plaque distributrice (17) est une plaque agencée au fond (6) du canal d'alimentation, avec une ouverture d'écoulement (19) dans sa zone centrale, l'ouverture d'écoulement étant délimitée par un seuil d'écoulement (18) qui l'entoure quasi complètement.

19. Dispositif selon la revendication 18, caractérisé en ce que le rapport de la section transversale (F_{Ö}) de l'ouverture d'écoulement à la surface totale (ΣF_{D}) des orifices de filières/sections transversales des filières montées dans la plaque filière (F_{Ö}) : (ΣF_{D}) = 10 - 50.

20. Dispositif selon la revendication 16, caractérisé en ce que dans la zone du bain de fusion comprise entre la cuve de fusion (1) et le canal d'alimentation (2), on prévoit un seuil (15) se détachant du fond (6) du canal d'alimentation et un bloc de raclage (16) partant de la surface (4) du bain de fusion.

21. Utilisation d'une fibre continue étirée conformément à l'une des revendications 1 à 15, en vue de la confection de tissus, d'articles non tissés (non woven) et de composites.

22. Utilisation selon la revendication 21, pour la fabrication de fibres courtes de dimensions géométriques définies.
